# EUROPEAN PATENT APPLICATION

(11) **EP 3 617 948 A1**
(43) Date of publication of application: **04.03.2020**
(21) Application number: 18191826.9
(22) Date of filing: 30.08.2018
(51) Int. Cl.: G06K 9/62

(54) **CAPSULE NETWORKS FOR ANALYZING MEDICAL IMAGE DATA**

(71) Applicant: Siemens Healthcare GmbH, 91052 Erlangen (DE)
(72) Inventor: The designation of the inventor has not yet been filed
(74) Representative: EIP

(57) **Abstract**

A system and method includes acquisition of one or more images of each of a plurality of bodies, each of the images associated with an acquisition time, determination, for each body, of a future health status of the body, the future health status of the body being a health status of the body at a time after the acquisition time of the one or more images of the body, and training of an artificial neural network to output a predicted health status, the training based on the one or more images and determined future health status of each body.

## Description

### BACKGROUND

Medical imaging systems acquire images of patient volumes. A radiologist uses these images to identify and diagnose disease. For example, a radiologist identifies features within an image, such as lesions, masses and architectural distortions, and formulates a diagnosis based on the identified features. Feature identification and resulting diagnoses therefore rely heavily on the skill and subjective judgment of the radiologist.

A variety of semi-automatic and automatic techniques have been developed to assist in the evaluation of medical images. Such techniques include computer-aided segmentation, detection, classification and registration of anatomical structures. It has been proposed to design and train artificial neural networks in order to perform one or more of the above tasks. However, training such networks requires a great deal of training data (e.g., segmented and classified images). Even if the requisite amount of training data were available, a conventional trained neural network may generate ambiguous results where separate structures overlap and/or where a spatial relationship between structures is relevant to the network's intended task.

What is needed are systems to analyze medical image data which address the shortcomings of existing approaches.

### BRIEF DESCRIPTION OF THE DRAWINGS

FIG. 1 is a block diagram of a system to train a capsule network to process medical image data according to some embodiments;
FIG. 2 is a block diagram of a system deploying a capsule network to process medical image data according to some embodiments;
FIG. 3 is a block diagram of a capsule network to identify objects based on medical image data according to some embodiments;
FIG. 4 is a block diagram of a capsule network to identify and reconstruct objects based on medical image data according to some embodiments;
FIG. 5 is a flow diagram of a process to train and deploy a capsule network to process medical image data according to some embodiments;
FIG. 6 is a block diagram of a system to train a capsule network to process medical image data according to some embodiments;
FIG. 7 is a block diagram of a system to train a capsule network to process medical image data according to some embodiments;
FIG. 8 is a block diagram of a system to train a capsule network to process medical image data and associated pose information according to some embodiments;
FIG. 9 is a block diagram of a system deploying a capsule network to process medical image data and associated pose information according to some embodiments;
FIG. 10 is a block diagram of a computing system to train a capsule network to process medical image data according to some embodiments; and
FIG. 11 is a diagram of an imaging system deploying a trained capsule network to process medical image data according to some embodiments.

### DETAILED DESCRIPTION

The following description is provided to enable any person in the art to make and use the described embodiments and sets forth the best mode contemplated for carrying out the described embodiments. Various modifications, however, will remain apparent to those in the art.

The embodiments described herein utilize capsule networks to analyze medical image data. Generally, a capsule network is a type of artificial neural network which preserves hierarchical pose relationships between objects during the determination of its output. In contrast, traditional convolutional neural networks do not model spatial hierarchies between objects.

A convolutional layer of a convolutional neural network is intended to detect features within the pixels of an image. Convolutional layers which are closer to the network input are trained to detect simple features such as edges and color gradients, and subsequent convolutional layers are trained to combine simple features and detect complex features therefrom. Dense layers closer to the network output combine the highest-level features and generate predicted classifications. Lower-level features are combined into higher-level features as a weighted sum, and the weights do not preserve any pose (e.g., translational and rotational) relationship between the lower-level features that might constitute a higher-level feature.

A capsule, on the other hand, encodes the probability that a feature has been detected as the length of an n-dimensional output vector. Each dimension of the output vector encodes a characteristic (e.g., location, rotation, deformation, lighting) of the feature. Changes to one or more characteristics of the feature may result in a same output vector length (i.e., a same probability of detection) but different values for one or more of the dimensions of the output vector. The information encoded within the output vectors may be used to segment and/or classify image features more accurately than previously available. Moreover, separate encoding of feature characteristics and detection probabilities allow training of a capsule network using less training data than similarly-tasked conventional neural networks.

Accordingly, some embodiments may operate to segment and/or classify overlapping structures within medical images. For example, embodiments may conceptually separate overlapping structures within X-ray projection images, analyze two-dimensional angiograms for detection of vessels, disease and intraoperative devices, distinguish between plaque and iodine on computed tomography images, or segment and quantify pulmonary nodules close to the pleura.

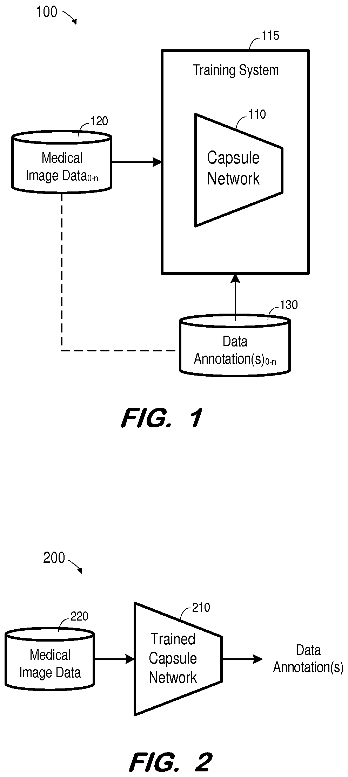

FIG. 1 illustrates system 100 to train a capsule network based on medical image data according to some embodiments. Capsule network 110 is trained using training system 115, medical image data 120 and data annotation(s) 130. Medical image data 120 may include one or more sets *0* through *n* of image data, and data annotation(s) 130 may comprise one or more annotations for each set of image data. Typically, data 120 and 130 comprise a large number of data sets and corresponding annotations (i.e., *n* is a large number).

For example, each set of medical image data 120 may comprise one or more two-dimensional and/or three-dimensional images. Medical image data 120 may comprise medical image data acquired using any imaging modality and in any format that are or become known. Examples include but are not limited to X-ray radiography, computed tomography(CT), single-photon emission computed tomography (SPECT), positron emission tomography (PET), ultrasound, magnetic resonance imaging (MRI), photoacoustic imaging, magnetic particle imaging, optical coherence tomography, optical camera, infrared camera, three-dimensional camera/depth camera, endoscopy, and digital holographic microscopy. The imaging modality may be multidimensional such as photon counting, multispectral CT, or multiple-sequence MRI. Medical image data 120 may comprise raw data acquired using any of the above-listed or other imaging modalities. Each set of medical image data may include acquisition parameters (e.g., DICOM images). Each set of medical image data 120 may comprise time-series data.

One or more data annotation(s) 130 are associated with each set of medical image data 120. An annotation may identify one or more features within each set of image data and any characteristic of the identified feature(s). For example, an annotation may indicate that a set of images depicts a vessel and plaque within the vessel, and also indicate the location of both features within each image of the set of images. The annotations may identify and/or segment any other overlapping structures.

Capsule network 110 may be trained within training system 115 as is known in the art to generate a function to output data annotations based on medical image data. Training system 115 may comprise any system or systems for training a capsule network that are or become known. For example, training system 115 may use reinforcement learning used as a function approximator as is known in the context of deep neural networks. Generative adversarial networks may be used such that either one or both of the generative and the discriminative networks are based on capsule networks. In yet another example, training system 115 may utilize a Siamese network including two subnetworks consisting of capsule networks.

As described with respect to FIG. 2, the learned function may then be used to generate data annotations based on input medical image data. In some embodiments, the generated data annotations comprise recreated segmented anatomical features as will be described below.

System 200 includes trained capsule network 210. Network 210 may be trained as described above with respect to network 100. Network 210 may comprise any type of processing system to implement the learned functions resulting from the training of network 110 of FIG. 1.

In operation, medical image data 220 (e.g., one or more images) are acquired and are input to trained network 210. The format and type of the input data correspond to the format and type of data per training sample used to train network 110. For example, if network 110 was trained based on a single three-dimension computed tomography image of each patient, input image 220 consists of a single three-dimension computed tomography image of a patient. Network 210 then operates according to the trained model to output one or more data annotations based on the input image. Since trained capsule network 210 preserves and incorporates the spatial orientation and/or other characteristics of lower-level features in its detection of higher-level features, the accuracy of the output data annotations, particularly with respect to obscured and/or overlapping structures, may be greater than conventionally available.

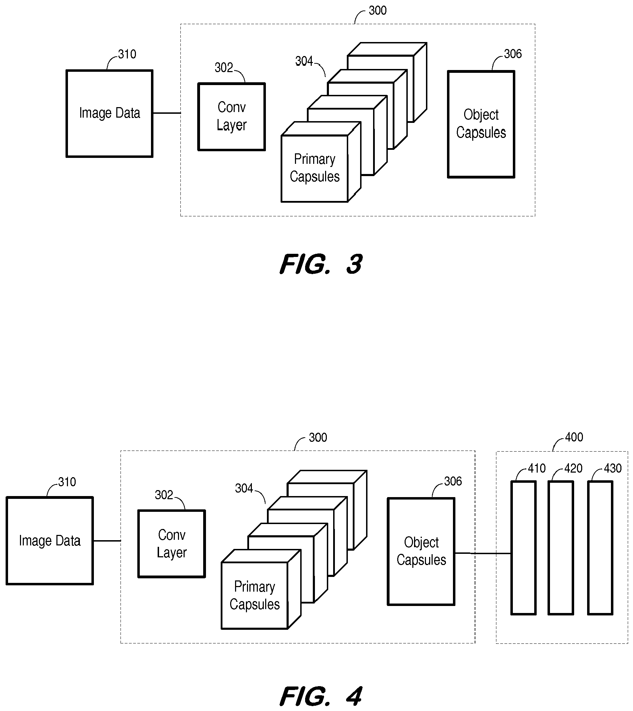

FIG. 3 illustrates an example of a capsule network according to some embodiments. Network 300 may be considered an encoder as will be described below. Generally, network 300 receives image data 310 and learns to encode image data 310 into an *n*-dimensional (e.g., *n*=16) vector of instantiation parameters. The output of network 300 is *m* (e.g., *m*=10 possible objects to detect) *n*-dimensional vectors, where the length of each output vector represents a probability that the associated object exists in image data 310.

Convolutional layer 302 detects basic features in image data 310. In one particular example, to which embodiments are not limited, convolutional layer 302 includes 256 kernels with size of 9x9x1 and stride 1, followed by ReLU activation. Primary capsule layer 304 includes, according to the example, thirty-two primary capsules which produce combinations of the features detected by convolutional layer 302. The primary capsules may be similar to convolutional layer 302. Each of the thirty-two primary capsules in the example applies eight 9x9x256 convolutional kernels to the 20x20x256 input volume and therefore produces an output volume having a 6x6x8x32 shape.

Object capsules 306 include one object capsule for each object to be detected. According to the example, each capsule receives a 6x6x8x32 tensor as input. This input may be considered as 6x6x32 8-dimensional input vectors. Each of these input vectors is associated with its own 8x16 weight matrix that maps an 8-dimensional input space to the 16-dimensional capsule output space. As described above, a length of each of the output 16-dimensional vectors represents a probability that its associated object is present in image data 310. Moreover, the values associated with each of the 16 dimensions of an output vector provide information regarding the characteristics of the object associated with the output vector. These values may therefore be used to recreate, or decode, the object.

A capsule receives input vectors from each other capsule in the layer below. These vectors then are multiplied by corresponding weight matrices W that encode spatial and other relationships between lower-level features and higher-level features.

A capsule i in a lower-level layer decides how to send its output vector to higher-level capsules *j*. This decision is reflected in the scalar weight *c_ij* that will multiply the capsule's output vector before being input to a higher-level capsule. Weight *c_ij* represents the weight that multiplies an output vector from lower-level capsule i before it is presented as input to a higher-level capsule *j*. Weights *c_ij* may be determined by an iterative dynamic routing algorithm.

Generally, the weights *c_ij* are determined such that a lower-level capsule will provide higher-weighted output to the higher-level capsule that "agrees" with its input. A weight is determined as equal to the old value plus the dot product of the current output of capsule *j* and the input to this capsule from a lower-level capsule *i*. The dot product incorporates a similarity between the input to the capsule and the output from the capsule.

FIG. 4 shows network 300 in conjunction with decoder 400. Decoder 400 receives as input the m n-dimensional output vectors from object capsules 306. During training, the recreated objects output by decoder 400 may be compared against corresponding objects of original image data 310, thereby training capsules of network 300 to learn features that are useful for reconstructing the original objects.

Each output of object capsules 306 is weighted and input to each neuron of fully connected layer 410 of decoder 400. Each neuron also includes a bias term. Continuing with the above example, layer 410 may include 16x10 inputs that are all directed to each of the 512 neurons of layer 410. Layers 420 and 430 behave similarly, although layer 420 includes 512 inputs and 1024 outputs, and layer 430 includes 1024 inputs and 784 outputs. The 784 outputs of layer 430 may be reshaped to provide an image of the same size as image data 310.

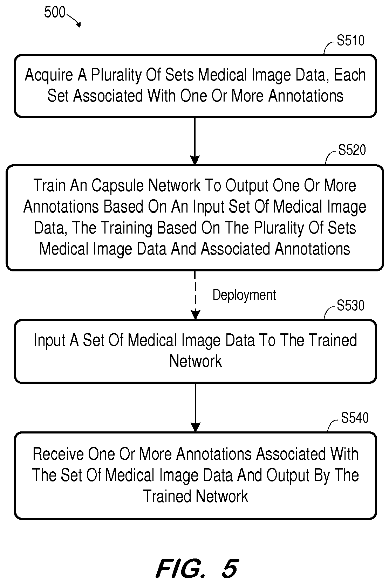

FIG. 5 is a flow diagram of process 500 depicted in FIGS. 1 and 2 according to some embodiments. Process 500 and the other processes described herein may be performed using any suitable combination of hardware and software. Software program code embodying these processes may be stored by any non-transitory tangible medium, including a fixed disk, a volatile or non-volatile random access memory, a floppy disk, a CD, a DVD, a Flash drive, or a magnetic tape. Embodiments are not limited to the examples described below.

Initially, at S510, a plurality of sets of image data are acquired. Each of the plurality of set is associated with one or more data annotations. For example, each set of medical image data 120 may comprise one or more sets of medical image data acquired using any imaging modality and in any format that are or become known. An annotation may identify one or more features within each set of image data and any characteristic of the identified feature(s).

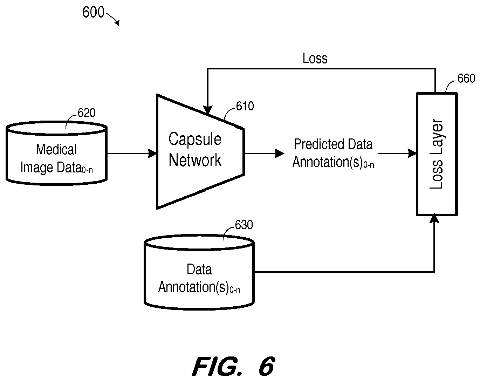

Next, at S520, a capsule network is trained to output one or more annotations based on an input set of medical image data. The training is based on the acquired plurality of sets of medical image data and associated annotations. FIG. 6 illustrates training architecture 600 according to some embodiments. Embodiments are not limited to the type of training depicted in FIG. 6.

During training, capsule network 610 receives one or more sets of acquired medical image data₀₋ₙ 620. Based on its initial configuration and design, capsule 410 outputs one or more predicted data annotations based on each of the one or more sets of acquired medical image data₀₋ₙ. Loss layer component 660 determines a loss by comparing each one or more predicted data annotation₀₋ₙ to the corresponding actual acquired data annotation₀₋ₙ 630. For example, network 610 generates predicted annotation₉ based on medical image data₉. Loss layer component 660 determines a loss based on a difference between predicted annotation₉ and actual annotation 630 corresponding to medical image data₉. The foregoing is performed for each set of medical image data₀₋ₙ to determine a total loss. The loss may comprise an L1 loss, and L2 loss, or any other suitable measure of total loss.

The total loss is back-propagated from loss layer component 660 to network 610, which changes its internal weights in response as is known in the art. The process repeats until it is determined that the total loss has reached an acceptable level or training otherwise terminates.

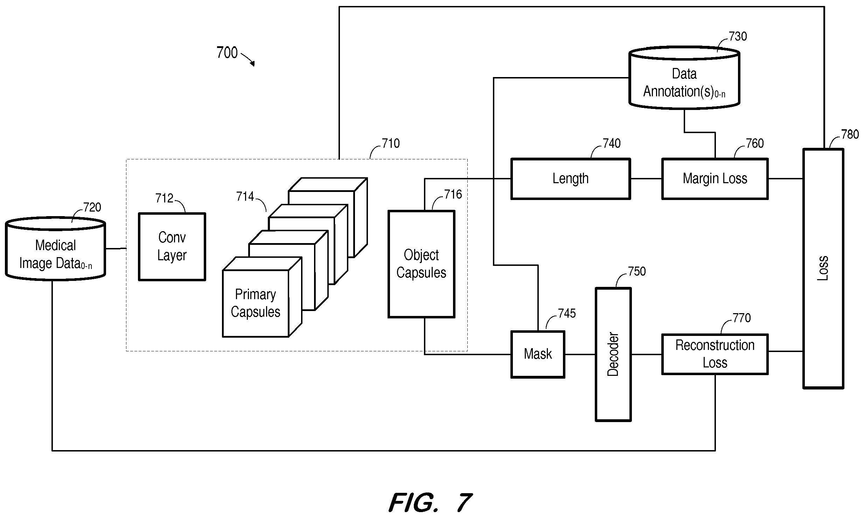

FIG. 7 illustrates a more detailed block diagram of training architecture 700 according to some embodiments. Training architecture 700 computes separate losses based on the output of object capsules 716 and of decoder 750. In particular, and as described above, object capsules 716 determine an *n*-dimensional output vector for each highest-level object, where a length of each vector represents a probability that the object is present in the input image. These lengths 740, for each input set of image data 720, are compared with the ground truth data (i.e., the existence or non-existence of each object) within data annotations 730 to determine margin loss 760.

On the other hand, the output of decoder 750 (i.e., the reconstructed objects themselves) is compared against the input image data 720 to determine reconstruction loss 770. Mask 745 ensures that reconstruction loss 770 is computed only for objects which have been detected by object capsules 716. Loss layer 780 determines an overall loss based on margin loss 760 and reconstruction loss 770.

Returning to process 500, the trained network is deployed after S520. Deployment may comprise determining the function represented by the trained network and implementing the function in another computing system according to techniques that are or become known.

After deployment, medical image data 220 (e.g., one or more images) is acquired and input to the trained network at S530. Next, at S540, the trained network operates to apply its learned function to output one or more data annotations based on the input image. The data annotations may comprise labels of identified object, segmented objects, classifications, or any other information.

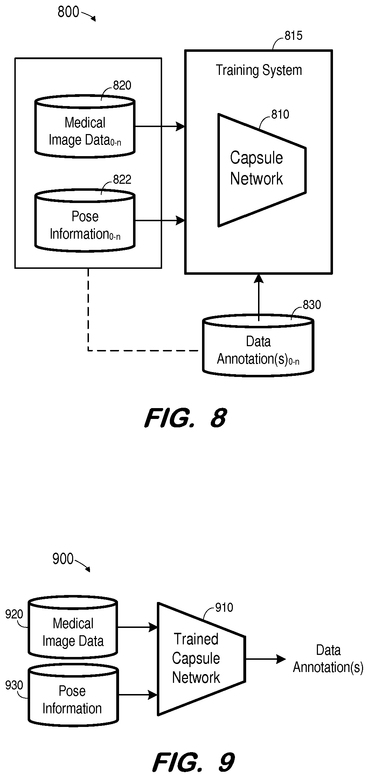

FIG. 8 illustrates architecture 800 according to some embodiments. Architecture 800 is similar to architecture 100 except for the addition of pose information 822. Pose information₀₋ₙ 822 may comprise data correlated with each set of medical image data₀₋ₙ 820. Pose information₀₋ₙ 822 may indicate a physical arrangement of a body represented by each set of medical image data₀₋ₙ 820. Pose information may indicate a viewpoint from which a set of image data was acquired, general human anatomical constraints, or the like. Pose information may be explicitly modeled, may be acquired from robotic or calibrated acquisitions, and/or detected based on image data or data annotations. Including pose information₀₋ₙ 822 in the training process may reduce detection and segmentation errors.

FIG. 9 illustrates example deployment of network 910 which was trained based on training architecture 800 shown in FIG. 8. As shown, network 910 receives a set of medical image data 920 and associated pose information 930 and outputs data annotations based thereon. The type of pose information 930 depends upon the type of pose information 822 used to train network 810.

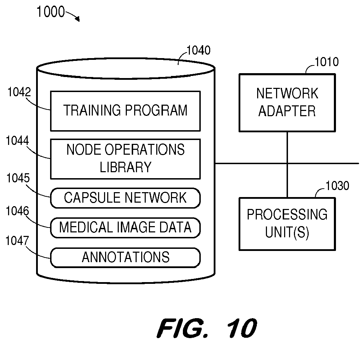

FIG. 10 illustrates computing system 1000 according to some embodiments. System 1000 may comprise a computing system to facilitate the design and training of capsule networks as is known in the art. Computing system 1000 may comprise a standalone system, or one or more elements of computing system 1000 may be network or cloud, edge or fog-located.

System 1000 includes network adapter 1010 to communicate with external devices via a network connection. Processing unit(s) 1030 may comprise one or more processors, processor cores, or other processing units to execute processor-executable process steps. In this regard, storage system 1040, which may comprise one or more memory devices (e.g., a hard disk drive, a solid-state drive), stores processor-executable process steps of training program 1042 which may be executed by processing unit(s) 1030 to train a capsule network as described herein.

Training program 1042 may utilize node operations library 1044, which includes code to execute various operations associated with capsule operations as defined in capsule network definitions 1045. According to some embodiments, computing system 1000 provides interfaces and development software (not shown) to enable development of training program 1042 and generation of definitions 1045. Storage device 1040 also includes medical image data 1046 and annotations 1047, which may be used by training program as described above to train a network defined within definitions 1045.

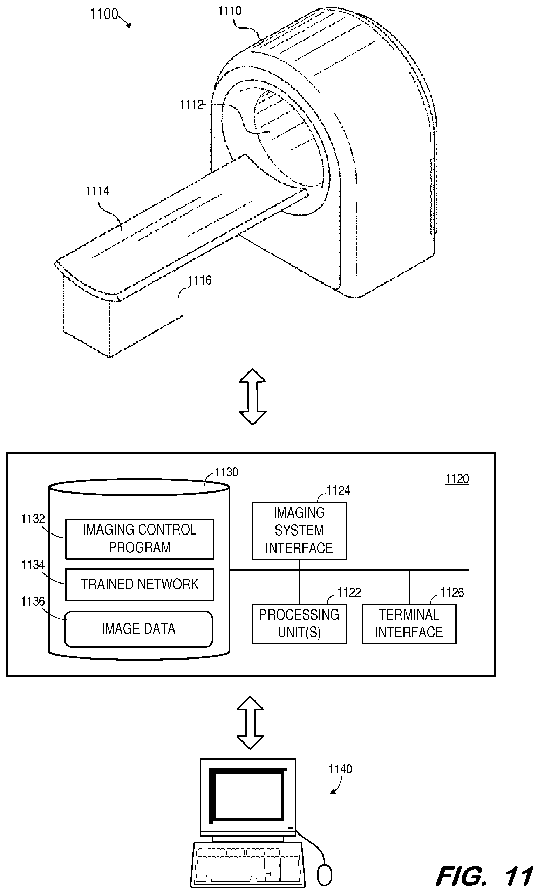

FIG. 11 illustrates medical imaging system 1100 in which a trained capsule network may be deployed according to some embodiments. Generally, imaging system 1100 may acquire one or more images of a patient and input the images to a trained network as described herein in order to generate one or more associated annotations as described above. Embodiments are not limited to system 1100 or to any imaging system. For example, a separate computing system may receive images from an imaging system or from a picture archiving and communications system and input those images to a trained network implemented by the separate computing system in order to generate the one or more annotations.

System 1100 includes gantry 1110 defining bore 1112. As is known in the art, gantry 1110 houses CT imaging components for acquiring CT image data. The CT imaging components may include one or more x-ray tubes and one or more corresponding x-ray detectors.

Bed 1114 and base 1116 are operable to move a patient lying on bed 1114 into and out of bore 1112. Movement of a patient into and out of bore 1112 may allow scanning of the patient using the CT imaging elements of gantry 1110.

Control system 1120 may comprise any general-purpose or dedicated computing system. Accordingly, control system 1120 includes one or more processing units 1122 configured to execute processor-executable program code to cause system 1120 to operate as described herein, and storage device 1130 for storing the program code. Storage device 1130 may comprise one or more fixed disks, solid-state random access memory, and/or removable media (e.g., a thumb drive) mounted in a corresponding interface (e.g., a USB port).

Storage device 1130 stores program code of imaging control program 1132. One or more processing units 1122 may execute imaging control program 1132 to, in conjunction with imaging system interface 1124, cause a radiation source within gantry 1110 to emit radiation toward a body within bore 1112 from different projection angles, and to control a corresponding detector to acquire two-dimensional CT data. The acquired data may be stored in memory 1130 as image data 1136.

One or more processing units 1122 may also execute code implementing trained network 1134. The code may be exported by system 700 after training of a network. The code may be executed to receive image data from image data 1136 and to generate one or more annotations based thereon.

An acquired image and its associated generated annotations may be transmitted to terminal 1140 via terminal interface 1126. Terminal 1140 may comprise a display device and an input device coupled to system 1140. In some embodiments, terminal 1140 is a separate computing device such as, but not limited to, a desktop computer, a laptop computer, a tablet computer, smartwatch, projector, augmented/virtual reality device, and a smartphone.

Some embodiments may be used for the detection, quantification, characterization, evaluation, subtypisation of lung nodules, calcium scores, fractional flow reserve values, risk of plaque rupture, clots/emboli, stenosis, bone density, radiomic features, texture features, bleeding, aneurysms, vessel diameters, vessel wall thicknesses, vessel tapering indices, airway diameters, airway wall thicknesses, airway tapering indices, emphysema volume, vertebral compression fractures, gas trapping, liver fat, epicardial fat, iron concentration, fat concentration, or other medically-related items.

Those in the art will appreciate that various adaptations and modifications of the above-described embodiments can be configured without departing from the claims. Therefore, it is to be understood that the claims may be practiced other than as specifically described herein.

## Claims

1. A computing system comprising:
a storage system;
one or more processors to execute processor-executable process steps stored on the storage system to cause the computing system to:
acquire one or more sets of image data of each of a plurality of bodies;
for each set of image data, acquire one or more annotations associated with objects depicted in the set of image data;
train a capsule network to output one or more network-generated annotations, the training based on the one or more sets of image data and the one or more annotations associated with each set of image data; and
operate the trained capsule network to receive a first set of image data and output a first one or more network-generated annotations based on the first set of image data.

2. A computing system according to Claim 1, the one or more processors to further execute processor-executable process steps stored on the storage system to cause the computing system to output a learned function of the trained capsule network to a second computing system.

3. A computing system according to Claim 1, wherein the acquired one or more annotations comprise an object label.

4. A computing system according to Claim 3, wherein the acquired one or more annotations comprise a graphical indication of a segmented object.

5. A computing system according to Claim 1, wherein the acquired one or more annotations comprise a graphical indication of a segmented object.

6. A computing system according to Claim 1, wherein one of the acquired sets of medical image data comprises time-series image data.

7. A method comprising:
acquisition of one or more sets of medical image data of each of a plurality of bodies;
for each set of medical image data, acquisition of one or more annotations associated with objects depicted in the set of medical image data;
training of a capsule network to output one or more network-generated annotations, the training based on the one or more sets of image data and the one or more annotations associated with each set of medical image data; and
operation of the trained capsule network to receive a first set of medical image data and output a first one or more network-generated annotations based on the first set of medical image data.

8. A method according to Claim 7, further comprising outputting a learned function of the trained capsule network to a second computing system.

9. A method according to Claim 1, wherein the acquired one or more annotations comprise an object label.

10. A method according to Claim 9, wherein the acquired one or more annotations comprise a graphical indication of a segmented object.

11. A method according to Claim 7, wherein the acquired one or more annotations comprise a graphical indication of a segmented object.

12. A method according to Claim 7, wherein one of the acquired sets of medical image data comprises time-series image data.

13. A system comprising:
a capsule network;
stored data comprising one or more sets of medical image data of each of a plurality of bodies, each of the one or more sets of medical image data associated with one or more annotations; and
a training architecture to train the capsule network to receive a first set of medical image data and output a first one or more network-generated annotations based on the first set of medical image data.
